# EUROPEAN PATENT SPECIFICATION

(11) **EP 1 078 529 B1**
(45) Date of publication and mention of the grant of the patent: **31.07.2013**
(21) Application number: 99920390.4
(22) Date of filing: 07.05.1999
(51) Int. Cl.: H04N 7/26, H04N 7/50

(54) **METHOD AND APPARATUS FOR INCREASING MEMORY RESOURCE UTILIZATION IN AN INFORMATION STREAM DECODER**
VERFAHREN UND VORRICHTUNG ZUR ERHÖHUNG DER SPEICHERAUSNUTZUNG IN EINEM INFORMATIONSSTROMDECODER
PROCEDE ET APPAREIL SERVANT A ACCROITRE L'UTILISATION DE RESSOURCES DE MEMOIRE DANS UN DECODEUR DE FLUX D'INFORMATIONS

(30) Priority: 07.05.1998 US 84632 P; 31.07.1998 US 127450
(43) Date of publication of application: 28.02.2001
(73) Proprietor: Sarnoff Corporation, Princeton, NJ 08543-5300 (US); MOTOROLA, INC., Schaumburg, IL 60196 (US)
(72) Inventor: LI, Shipeng, Princeton, NJ 08540 (US)
(74) Representative: Beresford, Keith Denis Lewis
(86) International application number: PCT/US1999/010025
(87) International publication number: WO 1999/057908

(56) References cited:
- EP-A- 0 794 673
- US-A- 5 434 567
- US-A- 5 706 220
- CLARKE R J: "TRANSFORM CODING OF IMAGES" 1985 , 2ND PRINTING 1990, ACADEMIC PRESS, "MICROELECTRONICS AND SIGNAL PROCESSING" SERIES , LONDON (GB), SECTIONS 3.5.4 , 7.4 XP002111367 * page 305, eq.(7.24) *
- ALBANESI M G ET AL: "IMAGE COMPRESSION BY THE WAVELET DECOMPOSITION" EUROPEAN TRANSACTIONS ON TELECOMMUNICATIONS AND RELATED TECHNOLOGIES, vol. 3, no. 3, 1 May 1992 (1992-05-01), pages 265-274, XP000304925 ISSN: 1120-3862
- MONET P.; DUBOIS E.: "Block Adaptive Quantization of Images", IEEE TRANSACTIONS ON COMMUNICATIONS, IEEE INC., vol. 41, no. 2 , pages 303-306, XP000392936, NEW YORK, US

## Description

The invention relates to communications systems generally and, more particularly, the invention relates to a method and apparatus for increasing memory utilization in an MPEG-like video decoder.

### BACKGROUND OF THE DISCLOSURE

In several communications systems the data to be transmitted is compressed so that the available bandwidth is used more efficiently. For example, the Moving Pictures Experts Group (MPEG) has promulgated several standards relating to digital data delivery systems. The first, known as MPEG-1 refers to ISO/IEC standards 11172 and is incorporated herein by reference. The second, known as MPEG-2, refers to ISO/IEC standards 13818 and is incorporated herein by reference. A compressed digital video system is described in the Advanced Television Systems Committee (ATSC) digital television standard document A/53, and is incorporated herein by reference.

The above-referenced standards describe data processing and manipulation techniques that are well suited to the compression and delivery of video, audio and other information using fixed or variable length digital communications systems. In particular, the above-referenced standards, and other "MPEG-like" standards and techniques, compress, illustratively, video information using intra-frame coding techniques (such as run-length coding, Huffman coding and the like) and inter-frame coding techniques (such as forward and backward predictive coding, motion compensation and the like). Specifically, in the case of video processing systems, MPEG and MPEG-like video processing systems are characterized by prediction-based compression encoding of video frames with or without intra- and/or inter-frame motion compensation encoding.

In a typical MPEG decoder, predictive coded pixel blocks (i.e., blocks that comprise one or more motion vectors and a residual error component) are decoded with respect to a reference frame (i.e., an anchor frame). The anchor frame is stored in an anchor frame memory within the decoder, typically a dual frame memory. As each block of an anchor frame is decoded, the decoded block is coupled to a first portion of the dual frame memory. When an entire anchor frame has been decoded, the decoded blocks stored in the first portion of the dual frame memory are coupled to a second portion of the dual frame memory. Thus, the second portion of the dual frame memory is used to store the most recent full anchor frame, which is in turn used by a motion compensation portion of the decoder as the reference frame for decoding predictive coded blocks.

Unfortunately, the cost of the memory necessary to implement an anchor frame memory may be quite high, in terms of money and in terms of integrated circuit die size (which impacts circuit complexity, reliability, power usage and heat dissipation). Moreover, as the resolution of a decoded image increases, the size of the required memory increases accordingly. Thus, in a high definition television (HDTV) decoder, the amount of memory must be sufficient to implement the (dual) anchor frame anchor memory required to decode the highest resolution image. In addition, since the bandwidth requirements (i.e., speed of data storage and retrieval) of the frame store memory increase as the resolution of the image being decodes increases, the bandwidth of the frame store memory must be able to handle the requirements of the highest resolution image to be decoded.

Therefore, it is seen to be desirable to provide a method and apparatus that significantly reduces the memory and memory bandwidth required to decode a video image while substantially retaining the quality of a resulting full-resolution or downsized video image.

### SUMMARY OF THE INVENTION

In generalterms, the invention comprises a method and apparatus for reducing memory and memory bandwidth requirements in an MPEG-like decoder. Memory and memory bandwidth requirements are reduced by compressing image information prior to storage, and decompressing the stored (compressed) image information prior to utilizing the image information in, e.g. a motion compensation module of the decoder. A method and apparatus are disclosed for compressing one or more blocks of pixels using a Haar wavelet transform and a preferential quantization and scaling routine to produce one or more respective words comprising preferentially quantized Haar wavelet coefficients and associated scaling indicia. Within the context of an MPEG-like processing system, memory resource requirements, such as for frame storage, are reduced by a factor of two. In another embodiment, each pixel block is subjected to discrete cosine transform (DCT) processing and high order DCT coefficient truncation, thereby effecting an improved compression ratio of the pixel information.

Specifically there is provided, in accordance with the invention and as specified in claim 1, a method for processing image information within a system for decoding an MPEG-like video stream, the method including compressing said image information and then storing the compressed image information in a memory module within said system and comprising the steps of: transforming, using a Haar wavelet transform, a pixel block to form a Haar coefficient block; quantizing, using a plurality of scaling factors, said Haar coefficient block to form a respective quantized Haar coefficient block, said plurality of scaling factors being selected to preferentially allocate an available bit budget to quantized Haar coefficients representing relatively low vertical and horizontal spatial frequency components of said pixel block; characterised in that said quantizing further comprises associating (530) said Haar wavelet coefficients with one of a low vertical and low horizontal spatial frequency quadrant (LL), a low vertical and high horizontal spatial frequency quadrant (LH), a high vertical and low horizontal spatial frequency quadrant (HL), and a high vertical and high horizontal spatial frequency quadrant (HH), with said LL quadrant comprising a DC sub-quadrant and a plurality of non-DC sub-quadrants, quantizing (408) using a first bit allocation, said Haar coefficients associated with said DC sub-quadrant, quantizing (408) using a second bit allocation, said Haar coefficients associated with said non-DC sub-quadrants, quantizing (406) using a third bit allocation, said Haar coefficients associated with said HL and HH quadrants, and quantizing (412, 414) using a fourth bit allocation, said Haar coefficients associated with said LH quadrant, where said fourth bit allocation is increased if more than a predetermined number of LL, HL and HH quadrant coefficients are quantized to zero; packing each of said quantized Haar coefficients and at least one of said plurality of scaling factors into a respective word; and storing said word in said memory module.

The embodiments are set out in the appended set of claims; the further examples called embodiments in the description are illustrative examples, not embodiments claimed in the present application.

Four prior art documents relating to image compression involving wavelet transformation and quantisation are acknowledged as follows.

US 5,534,567 discloses a process for encoding image signals in which an image is divided into a plurality of blocks and a first transform is applied to each of the blocks to generate a plurality of first transformed blocks, wherein each of the first transformed blocks comprises a DC first transformed signal and a plurality of AC first transformed signals. A second transform is applied to the DC first transformed signals for all of the first transformed blocks to generate a plurality of second transformed signals. The second transformed signals are encoded and then the AC first transformed signals are encoded. The second transform may be a DCT or slant transform, but is preferably a lossless transform, such as a Haar or Hadamard transform. This document does not disclose or suggest preferentially allocating an available bit budget in the manner specified according to the present invention.

EP-A-0 794 673 discloses a video decoder with a compression section using, for example, Haar conversion, and a memory for the compressed data. More bits are allocated to a relatively low frequency signal region, but there is no disclosure or suggestion of the use of vertical and horizontal spatial frequency components in allocating an available bit budget in the manner specified according to the present invention.

US 5,706,220 discloses wavelet transform for, e.g. video signal, compression using a bit budget and a number of stages depending on the compression ratio required. However, there is no disclosure or suggestion of the use of a Haar wavelet transform.

ALBANESI M G ET AL: "IMAGE COMPRESSION BY THE WAVELET DECOMPOSITION" EUROPEAN TRANSACTIONS ON TELECOMMUNICATIONS AND RELATED TECHNOLOGIES, vol. 3, no. 3, 1 May 1992 (1992-05-01), pages 265-274, XP000304925 ISSN: 1120-3862 discloses techniques, for example for application to image transmission, including the use of Haar wavelet transform, quantisation, quad-tree structure coding and storage in a fixed length word. However, an available bit budget in the manner specified according to the present invention.

### BRIEF DESCRIPTION OF THE DRAWINGS

The teachings of the present invention can be readily understood by considering the following detailed description in conjunction with the accompanying drawings, in which:
FIG. 1 depicts an embodiment of an MPEG-like decoder according to the invention;
FIG. 2 depicts a compression module suitable for use in the MPEG-like decoder of FIG. 1;
FIG. 3 depicts a decompression module suitable for use in the MPEG-like decoder of FIG. 1;
FIG. 4 depicts a flow diagram of a data compression method according to the invention and suitable for use in the compression module of FIG. 1 or the MPEG-like decoder of FIG. 1;
FIG. 5 depicts a graphical representation of the data compression method of FIG. 4;
FIG. 6 depicts a block diagram of a compression process according to the invention; and
FIG. 7 depicts a block diagram of a compression process according to the invention.

To facilitate understanding, identical reference numerals have been used, where possible, to designate identical elements that are common to the figures.

### DETAILED DESCRIPTION

The invention will be described within the context of a video decoder, illustratively an MPEG-2 video decoder. However, it will be apparent to those skilled in the art that the invention is applicable to any video processing system, including those systems adapted to DVB, MPEG-1 and other information streams.

Specifically, the invention will be primarily described within the context of an MPEG-like decoding system that receives and decodes a compressed video information stream IN to produce a video output stream OUT. The invention operates to reduce memory and memory bandwidth requirements in the MPEG-like decoder by compressing image information prior to storage, and decompressing the stored (compressed) image information prior to utilizing the image information in, e.g., a motion compensation module of the decoder.

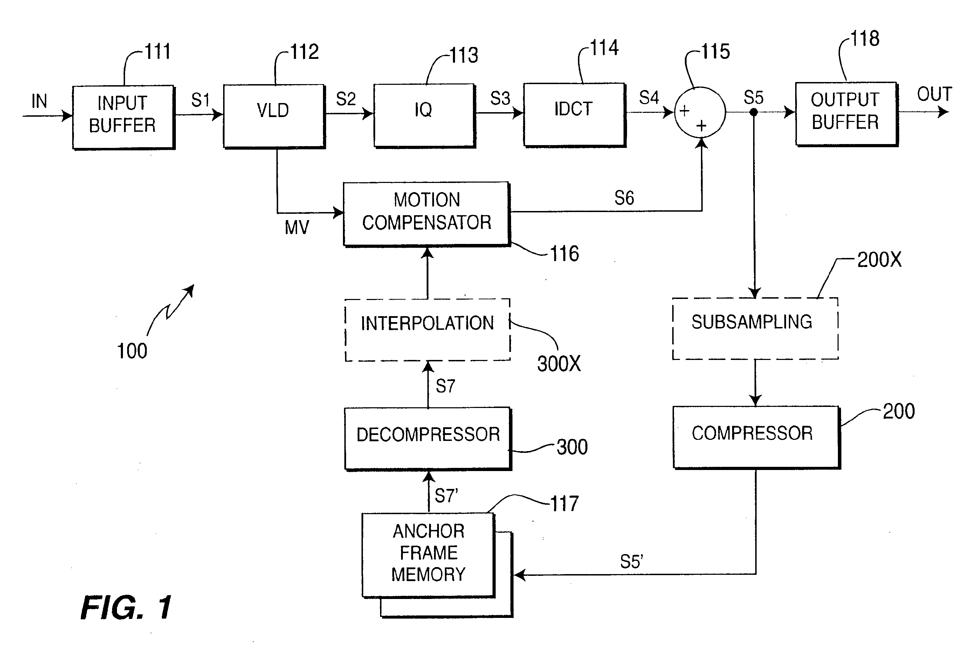

FIG. 1 depicts an embodiment of an MPEG-like decoder 100 according to the invention. Specifically, the decoder 100 of FIG. 1 receives and decodes a compressed video information stream IN to produce a video output stream OUT. The video output stream OUT is suitable for coupling to, e.g., a display driver circuit within a presentation device (not shown).

The MPEG-like decoder 100 comprises an input buffer memory module 111, a variable length decoder (VLD) module 112, an inverse quantizer (IQ) module 113, an inverse discrete cosine transform (IDCT) module 114, a summer 115, a motion compensation module 116, an output buffer module 118, an anchor frame memory module 117, a compression module 200 and a decompression module 300. Optionally, MPEG-like decoder 100 comprises a sub-sampling module 200X and an interpolation module 300X.

The input buffer memory module 111 receives the compressed video stream IN, illustratively a variable length encoded bitstream representing, e.g., a high definition television signal (HDTV) or standard definition television signal (SDTV) output from a transport demultiplexer/decoder circuit (not shown). The input buffer memory module 111 is used to temporarily store the received compressed video stream IN until the variable length decoder module 112 is ready to accept the video data for processing. The VLD 112 has an input coupled to a data output of the input buffer memory module 111 to retrieve, e.g., the stored variable length encoded video data as data stream S1.

The VLD 112decodes the retrieved data to produce a constant length bit stream S2 comprising quantized prediction error DCT coefficients, and a motion vector stream MV. The IQ module 113 performs an inverse quantization operation upon constant length bit stream S2 to produce a bit stream S3 comprising quantized prediction error coefficients in standard form. The IDCT module 114 performs an inverse discrete cosine transform operation upon bit stream S3 to produce a bitstream S4 comprising pixel-by-pixel prediction errors.

The summer 115 adds the pixel-by-pixel prediction error stream S4 to a motion compensated predicted pixel value stream S6 produced by the motion compensation module 116. Thus, the output of summer 115 is, in the exemplary embodiment, a video stream S5 comprising reconstructed pixel values. The video stream S5 produced by summer 115 is coupled to the compression module 200 and the output buffer module 118. Optionally, the video stream S5 produced by summer 115 is coupled to the sub-sampling module 200X.

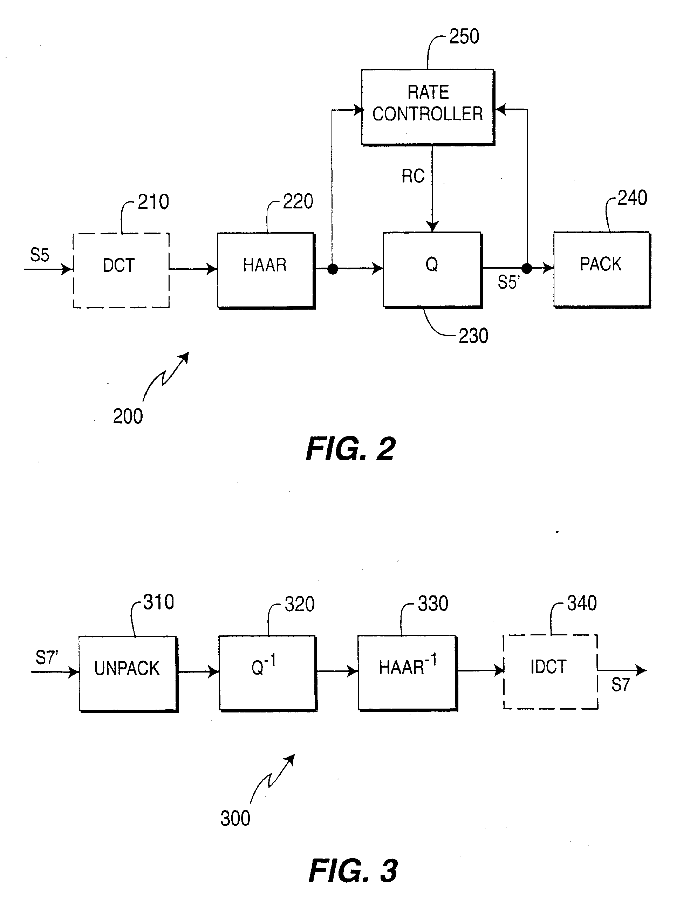

The compression module 118 compresses the video stream S5 on a block by block basis to produce a compressed video stream S5'. The operation of the compression module 200 will be described in more detail below with respect to FIGS. 2, 4 and 5. Briefly, the compression module 200 operates on a pixel block by pixel block basis (e.g., a 4x4, 4x8 or 8x8 pixel block) to compress each pixel block within an anchor frame by processing the block according to a Haar wavelet transform, preferentially quantizing the resulting Haar coefficient block, scaling the resulting quantized coefficients and packing the scaled coefficients and associated scaling factors to form a scaled, quantized, Haar domain representation of the pixel block that is coupled to the compression module output as part of compressed video stream S5'. It is noted by the inventors that such a scaled, quantized, Haar domain representation of the anchor frame requires approximately half the memory required for the pixel domain anchor frame representation. Thus, the memory requirements of anchor frame memory module 117 are reduced by a factor of two.

Prior to performing a Haar wavelet transform on a pixel block, the pixel block may be processed using a one- or two-dimensional DCT function, and, optionally, a DCT coefficient truncation function. The resulting DCT coefficients (truncated or not) are then processed according to the Haar wavelet transform.

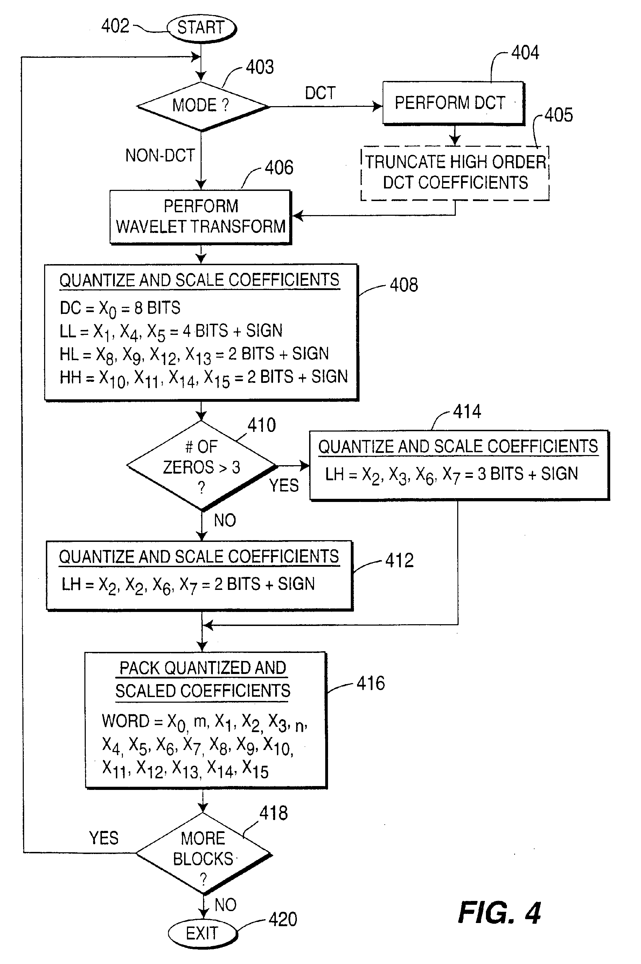

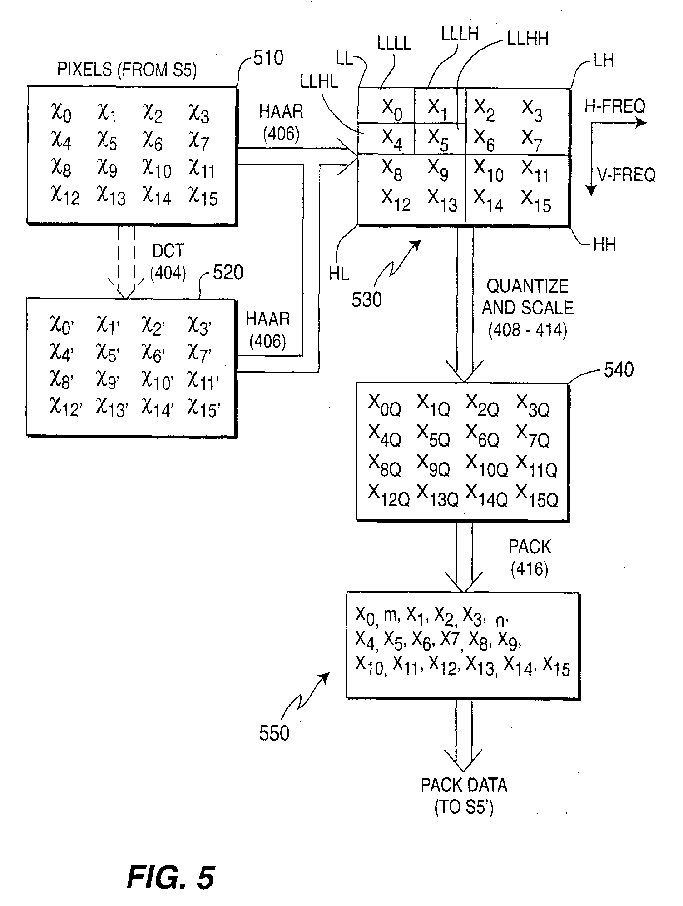

In one embodiment of the invention, 4x4 pixel blocks are subjected to a 2D Haar wavelet transform, the results of which are adaptively quantized and scaled prior to being packed into data words for subsequent storage in, e.g., anchor frame memory module 117. Each of the resulting scaled, Haar domain representations of the 4x4 pixel blocks occupies approximately 64 or fewer bits. This embodiment of the invention effects a 2:1 compression of pixel information, and will be discussed in more detail below with respect to FIGS. 4 and 5.

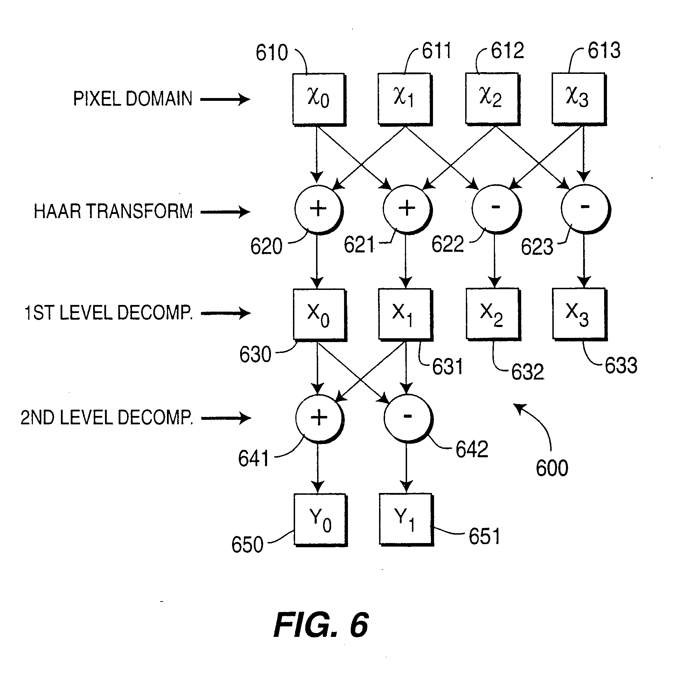

In another embodiment of the invention, 4x8 pixel blocks (i.e., 4 pixel rows by 8 columns) are processed using a 1D or 2D DCT to produce respective 4x8 blocks of DCT coefficients. After truncating the high order DCT coefficients, the resulting 4x4 blocks of DCT coefficients are subjected to 2D Haar wavelet transform, the results of which are adaptively quantized and scaled prior to being packed into data words. Each of the resulting scaled, Haar domain representations of the pixel blocks occupies approximately 64 or fewer bits. This embodiment of the invention effects a 4:1 compression of pixel information, and will be discussed in more detail below with respect to FIG. 6.

The anchor frame memory module 117 receives and stores the compressed video stream S5'. Advantageously, the size of the anchor frame memory module 117 may be reduced to half the normal size, since a 2:1 compressed representation of the pixel block is stored, rather than the pixel block itself. The compressed pixel blocks stored in the anchor frame memory module 117 must be provided to the motion compensation module 116 for further processing. However, since the motion compensation module processes uncompressed pixel data, the compressed pixel blocks are first provided to decompression module 300 via signal path S7' for decompression. Optionally, the output of the decompression module 300 is coupled to interpolation module 300X for up-sampling (i.e., resizing) of the uncompressed pixel data prior to processing by motion compensation module 116.

Decompression module 300 essentially mirrors the operation of the compression module 200 described above. That is, decompression module 300 receives each Haar domain block and unpacks the received Haar domain block to retrieve the Haar coefficients and the previously used scaling factors. The unpacked Haar coefficients are then scaled using the unpacked scaling factors and subjected to an inverse Haar wavelet transform to substantially reproduce the original pixel block. Optionally, the inverse Haar wavelet transform produces a block of DCT coefficients, which are then subjected to an inverse DCT transform to substantially reproduce the original pixel block. The decompression module 300 will be discussed in more detail below with respect to FIG. 3.

The decompression module 300 is accessed by the motion compensation module 116 via signal path S7. That is, the motion compensation module 116 utilizes one or more stored anchor frames (e.g., the substantially reproduced pixel blocks forming the most recent I-frame or P-frame of the video signal produced at the output of the summer 115), and the motion vector signal MV received from the VLD 112, to calculate the values for the motion compensated predicted pixel value stream S6.

The operation of optional sub-sampling module 200X and interpolation module 300X will now be descried. Sub-sampling module 200X operates to operated to sub-sample, or decimate, the pixel information within video stream S5 to produce effect a resizing (i.e., downsizing) of the video image represented by the pixel data. For example, a 1920 pixel by 1080 line high definition image may be resized to a smaller image, such as a standard 720 pixel by 480 line image, or some other non-standard format selected to generally reduce memory requirements or reduce memory requirement to a specific level determined by, e.g., available semiconductor area or other factors. The sub-sampled video stream is then processed by compression module 200 in the manner described elsewhere in this application.

Interpolation module 300X is used to resize (i.e., upsize) the previously downsized image information resulting from the operation of sub-sampling module 200X. The interpolation module 300X utilizes the image information provided by decompression module 300 to calculate (i.e., approximate) image information previously removed by the operation of the sub-sampling module 200X, such that the motion compensation module 116 receives pixel information representative of an appropriate image size. It must be noted that the operation of sub-sampling module 200X and interpolation module 300X will inherently cause a loss in image resolution and image quality. However, within the context of, e.g., a presentation system incapable of providing such resolution (i.e., a small display tube television system) the loss of image resolution will not be noticed, and the cost savings from memory reduction may be critical to the market success of the presentation system.

FIG. 2 depicts a compression module 200 suitable for use in the MPEG-like decoder of FIG. 1. The compression module 200 comprises an optional discrete cosine transform module (DCT) 210, a wavelet transform module 220, illustratively a Haar wavelet transform module (HAAR), a quantization module (Q) 230, a packing module (PACK) 240 and a rate control module 250. The functionality of the compression module may be implemented as an application specific integrated circuit (ASIC) or as a general purpose computer that is programmed to perform specific control functions in accordance with the present invention.

The compression module 200 operates in one of a discrete cosine transform (DCT) compression mode and a non-DCT compression mode to effect a compression of the pixel information included within the video stream S5.

In the non-DCT compression mode, the compression unit 200 effects a 2:1 compression of pixel information. For example, in the case of a 4x4 pixel block having 8 bit dynamic range (comprising approximately 128 bits of information), the compression module operating in the non-DCT mode produces a 64 bit representation of each 4x4 pixel without substantial loss in image quality. Similarly, in the case of an 8x8 pixel block (approximately 512 bits) or an 8x4 pixel block (approximately 256 bits), the compression module operating in the non-DCT mode produces, respectively, a 256 bit or a 128 bit representation without substantial loss in image quality.

In the DCT compression mode (i.e., where high order DCT coefficients are truncated prior to Haar transformation), the compression unit 200 effects a 4:1 compression of pixel information. Thus, in the case of an 8x8 pixel block (approximately 512 bits) or an 8x4 pixel block (approximately 256 bits), the compression module operating in the DCT mode produces, respectively, a 128 bit or a 64 bit representation of the pixel information, albeit with a slight reduction in high frequency image information (e.g., "edge" information).

The output of the DCT module 210 is coupled to the Haar transform module 220, where the input pixel block or DCT coefficient block is subjected to a Haar transform process. The resulting Haar coefficient block is coupled to the quantizer 230. Quantizer 230, in response to a control signal RC produced by rate controller 250, preferentially quantizes and scales the Haar wavelet coefficient block to produce a data word, which is coupled to the packing module 240 as information stream S5'. Rate controller 250 monitors the input to the quantizer 230 and the output from the quantizer 230 to determine the type and size of the coefficient blocks being quantized.

In the non-DCT compression mode, each, illustratively, 4x4 pixel block (i.e., pixels x₀ through x₁₅) is subjected to a two dimensional Haar wavelet transformation to produce a corresponding 4x4 Haar coefficient block (i.e., coefficients X₀ through X₁₅). Each of the Haar coefficients represents the spectral energy associated with a portion of the horizontal spatial frequency components and vertical frequency components of the video information contained within the 4x4 pixel block. The Haar coefficients are then quantized in a preferential manner such that "important" coefficients (i.e., those coefficients representing spatial frequency components providing image information more readily discernable to the human eye) are allocated more bits than less important coefficients. The quantized coefficients are then scaled by a factor of 1/2", where n is selected as the minimum n that satisfies the following relationship: 2^{(n+m)} is less than the maximum value of the absolute value of wavelet coefficients in a set, where a set refers those coefficients that share the same scaling factor and m is the number of bits allocated to each coefficient in the set. Finally, the scaled coefficients and the associated scaling factors are packed into an (approximately) 64 bit word. The 64 bit word is then coupled to the anchor frame memory module 117 as part of compressed video stream S5'.

In the DCT compression mode, each, illustratively, 4x8 pixel block (i.e., pixels x₀ through x₃₁) is subjected to a 1D or 2D DCT function to produce a corresponding 4x8 DCT coefficient block (i.e., coefficients X_{0'} through X_{31'}). The high order DCT coefficients are the truncated (i.e., coefficients X_{16'} through X_{31'}), resulting in a 4x4 DCT coefficient block (i.e., coefficients X_{0'} through X_{15'}). The resulting DCT coefficient block is then subjected to a two dimensional Haar wavelet transformation to produce a corresponding 4x4 Haar wavelet coefficient block (i.e., coefficients X₀ through X₁₅). The Haar wavelet coefficients are then preferentially quantized, scaled and packed in substantially the same manner as provided in the non-DCT mode of operation to produce, in the case of a 4x8 pixel block, a corresponding 64 bit word. The 64 bit word is then coupled to the anchor frame memory module 117 as part of compressed video stream S5'. The selection of DCT mode or non-DCT mode may be made according to the needs of a particular application. For example, in a low resolution or standard definition (i.e., not high definition) television application, it may be acceptable to "drop" some of the high frequency detail information in the image, whereas such information may be crucial to a high definition application. Additionally, the memory constraints within which a decoder is designed may dictate the use of an enhanced level of compression, such as provided by the DCT mode of operation.

FIG. 3 depicts a decompression module 300 suitable for use in the MPEG-like decoder of FIG. 1. The decompression module 300 of FIG. 3 comprises a series coupling in the order named of an unpacking module 310, an inverse quantization (Q-1) module 320, an inverse Haar transform (HAAR-1) module 330 and an optional inverse discrete cosine transform module (IDCT) 340. The decompression module operates in the reverse order, and with the inverse functionality, of the corresponding modules described above with respect to the compression module 200. Therefore, the operation of the decompression module will not be discussed in great detail. Briefly, the decompression module 300 receives a packed data word, unpacks the data word to retrieve a Haar wavelet coefficient block and performs an inverse Haar wavelet transformation on the unpacked coefficient block to produce a DCT coefficient block or a pixel block. In the case of a DCT coefficient block that was not truncated by the compression module 200, the DCT coefficient block is subjected to an inverse DCT operation to produce a pixel block. In the case of a DCT coefficient block that was truncated by the compression module 200, NULL coefficients are added to the DCT coefficient block to fill it out to the appropriate size, and the "filled out" DCT coefficient block is subjected to an inverse DCT operation to produce a pixel block.

The operation of the compression module 200 will now be described in more detail with respect to FIG. 4 and FIG. 5. FIG. 4 depicts a flow diagram of a data compression method according to the invention and suitable for use in the compression module of FIG. 2 or the MPEG-like decoder of FIG. 1. FIG. 5 depicts a graphical representation of the data compression method of FIG. 4. The compression routine 400 of FIG. 4 may be implemented as a logical function between cooperating modules of the MPEG-like decoder 100 of FIG. 1. The compression routine 400 may also be implemented as a routine within a general purpose computing device. The compression routine 400 operates to compress each, illustratively, 4x4 pixel block within a video stream (i.e., the video stream S5 produced at the output of adder 115 in the MPEG-like encoder of FIG. 1) to produce a data set representative of the 4x4 pixel block with a much smaller amount of data.

The compression routine 400 is entered at step 402, when, e.g., a 4x4 pixel block (reference numeral 510 in FIG. 5) is received by compression module 200. The compression routine 400 proceeds to step 403, where a query is made as to the mode of operation of the compression module. If the answer to the query as step 403 indicates that the compression module is operating in a non-DCT mode of operation, then the routine 400 proceeds to step 406. If the answer to the query as step 403 indicates that the compression module is operating in a DCT mode of operation, then the routine 400 proceeds to step 404.

At step 404 a discrete cosine transform (DCT) is performed on the 4x4 pixel block to produce a 4x4 block of DCT coefficients (reference numeral 520 in FIG. 5). The DCT may be a one-dimensional or two-dimensional DCT. The compression routine 400 then proceeds, optionally, to step 405, where the high order DCT coefficients generated by the DCT transform of step 404 are truncated (not shown in FIG. 5). The routine 400 then proceeds to step 406.

The combination of DCT transformation (step 404) and high order DCT coefficient truncation (step 405) is especially useful where greater compression is needed. For example, consider the case of input pixel blocks comprising 4x8 pixel blocks (i.e., 4 pixel rows by 8 columns) rather than 4x4 pixel blocks, where the memory allocation remains constant (i.e., a 4:1 compression is necessary). After performing, e.g., a 2D DCT as step 404 to produce a respective 4x8 block of DCT coefficients, the high order DCT coefficients (i.e., the 16 DCT coefficients representing the highest pixel spectra within the pixel block) are optionally truncated to produce a 4x4 DCT coefficient block. This 4x4 DCT coefficient block comprises t to form a he majority of the pixel domain information contained within the pixel block, lacking only the highest frequency pixel domain information. To reconstruct the pixel domain information (e.g., at decompression module 300), 16 NULL DCT coefficients are added to the 16 non-truncated DCT coefficients to form a 4x8 DCT coefficient block that, when processed according to an inverse DCT module, will produce a 4x8 pixel block. The produced 4x8 pixel block may lack some of the high frequency (i.e., detail) information found in the original 4x8 pixel block, but such information may not be crucial to the application (or the memory to hold such information may not be available).

In the case of a 4x4 pixel block or an 8x8 pixel block, the high order truncation of step 405 will result in, respectively, a 2x4 DCT block or a 4x8 DCT block. The number of coefficients truncated may be adapted such that more or less DCT coefficients are truncated. For example, the 8x8 DCT coefficient block resulting from a 2D DCT processing of an 8x8 pixel block may be truncated to produce a 4x4 pixel block (with a corresponding decrease in high frequency image information).

At step 406 a 2-dimension Haar wavelet transform is performed on the original 4x4 pixel block (510), the DCT coefficient block produced at step 404 (520), or, optionally, the truncated DCT coefficient block produced at step 405. The 2-dimensional Haar wavelet transform results in a 4x4 block of wavelet coefficients (reference numeral 530 in FIG. 5). Each of the wavelet coefficients represents a specific frequency range of the vertical and horizontal spatial frequency components of the 4x4 pixel block 510.

Referring now to FIG. 5, the 4x4 block of wavelet coefficients (530) is divided into four quadrants according to the represented vertical and horizontal spectra. An upper left quadrant, denoted as an "LL" quadrant, includes those wavelet coefficients representing low vertical spatial frequency components and low horizontal spatial frequency components of the 4x4 pixel block 510. An upper right quadrant, denoted as an "LH" quadrant, includes those wavelet coefficients representing low vertical spatial frequencies and high horizontal spatial frequencies. A lower left quadrant, denoted as an "HL" quadrant, includes those wavelet coefficients representing high vertical spatial frequency components and low horizontal spatial frequency components. A lower right quadrant, denoted as an "HH" quadrant, includes those wavelet coefficients representing high vertical spatial frequency components and high horizontal spatial frequency components.

The LL quadrant is further divided into four sub-quadrants according to the represented vertical and horizontal spectra within the LL quadrant. An upper left sub-quadrant, denoted as an "LLLL" sub-quadrant, includes those coefficients representing a substantially DC vertical and horizontal spatial frequency component of the 4x4 pixel block 510. An upper right sub-quadrant, denoted as an "LLLH" sub-quadrant, includes those wavelet coefficients representing low vertical spatial frequencies and high horizontal spatial frequencies. A lower left sub-quadrant, denoted as an "LLHL" sub-quadrant, includes those wavelet coefficients representing high vertical spatial frequency components and low horizontal spatial frequency components. A lower right sub-quadrant, denoted as an "LLHH" sub-quadrant, includes those wavelet coefficients representing high vertical spatial frequency components and high horizontal spatial frequency components.

After performing the 2D Haar wavelet transform (step 406), the compression routine 400 proceeds to step 408, where the wavelet coefficients are quantized using a 2ⁿ scaling factor (reference numeral 540 in FIG. 5). The quantization process reduces the accuracy with which the wavelet coefficients are represented by dividing the wavelet coefficients by a set of quantization values or scales with appropriate rounding to form integer values. The quantization values are set individually for each set of wavelet coefficients. By quantizing the DCT coefficients with this value, many of the DCT coefficients are converted to zeros, thereby improving image compression efficiency. Specifically, the wavelet coefficients are preferentially quantized, such that "more important" coefficients (i.e., those wavelet coefficients representing spatial frequency components providing image information more readily discernable to the human eye) are allocated more bits than "less important" coefficients. That is, the number of bits used to represent each coefficient is reduced by an amount inversely proportional to the relative importance of the coefficient in representing an image.

Since the human eye is more sensitive to low spatial frequency image components, the DC component of an image is the most important. Thus, the X₀ coefficient (i.e., the LLLL sub-quadrant) is quantized using a scaling factor of four to an eight bit level of precision, resulting in a quantized DC component X_{0Q}. The remaining LL quadrant coefficients, i.e., the X₁, X₂ and X₃ coefficients are each quantized using a scaling factor of 4*2^{m} to a four bits (plus a sign bit) level of precision, resulting in quantized LL components X_{1Q}, X_{2Q} and X_{3Q}. The scaling factor "m" comprises a 2-bit integer.

In the exemplary embodiment, the LH quadrant is deemed by the inventors to be the second most important quadrant. However, the quantization of the LH quadrant will depend upon how much of the 64 bit word budget is consumed in quantizing the remaining two quadrants (i.e., the HL and HH quadrants). Thus, the two "least important" quadrants, the HL and HH quadrants, are processed before the LH quadrant.

The HL quadrant coefficients, i.e., X₈, X₉, X₁₂ and X₁₃, are each quantized using a scaling factor of 4*2ⁿ to a two bit (plus a sign bit) level of precision, resulting in quantized HL components X_{8Q}, X_{9Q}, X_{12Q} and X_{13Q}. The HH quadrant coefficients, i.e., X₁₀, X₁₁, X₁₄ and X₁₅, are each quantized using a scaling factor of 4*2ⁿ to a two bit (plus a sign bit) level of precision, resulting in quantized HH components X_{10Q}, X_{11Q}, X_{14Q} and X_{15Q}. If quantization of a coefficient results in a zero value coefficient, then a sign bit is not used for that coefficient. The scaling factor "n" comprises a 3-bit integer.

After quantizing the coefficients for the LL, HL and HH quadrants (step 408), the compression routine 400 proceeds to step 410, where a query is made as to whether the number of zero-coded coefficients is greater than 3. That is, whether four or more of the coefficients quantized at step 408 were quantized to a value of zero, such that four or more sign bits were not used.

If the query at step 410 is answered affirmatively, then the compression routine 400 proceeds to step 414 where the LH quadrant coefficients, i.e., X₂, X₃, X₆ and X₇, are each quantized using a scaling factor of 4*2⁽ⁿ⁻¹⁾ to a three bit (plus a sign bit) level of precision, resulting in quantized LH components X_{2Q}, X_{3Q}, X_{6Q} and X_{7Q}. The compression routine 400 then proceeds to step 416.

If the query at step 410 is answered negatively, then the compression routine 400 proceeds to step 412 where then the LH quadrant coefficients, i.e., X₂, X₃, X₆ and X₇, are each quantized using a scaling factor of 4*2ⁿ to a two bit (plus a sign bit) level of precision, resulting in quantized LH components X_{2Q}, X_{3Q}, X_{6Q} and X_{7Q}. The compression routine 400 then proceeds to step 416.

At step 416, the quantized wavelet coefficients X_{0Q} through X_{15Q} are packed (reference numeral 550 in FIG. 5) to produce compressed output stream S5'. That is, in the case of the exemplary 4x4 pixel block processing described above, an approximately 8-byte (64 bit) word is formed by concatenating the scaled coefficients and scaling factors as follows: "X_{0Q}, m, X_{1Q} X_{2Q}, X_{3Q}, X_{3Q}, n, X_{4Q}, X_{5Q}, X_{6Q}, X_{7Q}, X_{8Q}, X_{9Q}, X_{10Q}, X_{11Q}, X_{12Q}, X_{13Q}, X_{14Q}, X_{15Q}".

After packing the scaled coefficients and scaling factors (step 416), the routine 400 proceeds to step 418, where a query is made as to whether there are more pixel blocks within the frame to be processed. If the query at step 418 is answered affirmatively, then the routine 400 proceeds to step 406 (or optional step 404), and the above-described transform, quantization scaling and packing process is repeated for the next pixel block. If the query at step 418 is answered negatively, then the routine 400 proceeds to step 420 and exits. The routine may be reentered at step 402 when, e.g., the first pixel block of a subsequent image frame is received.

It should be noted that the order of packing is not relevant to the practice of the invention. However, since certain coefficients and scaling factors are required to be utilized before others for, e.g., inverse scaling and transform operations, the inventors have identified the disclosed order as a preferred order within the context of an MPEG-like video information stream. Packing order may be differently optimized for other types of information streams.

In the exemplary embodiment of the invention a 4x4 pixel block is processed in a non-DCT mode, and a 4x8 pixel block is processed in a DCT mode of operation. Therefore, the above described sub-quadrants each contain only one wavelet coefficient. It will be readily understood by those skilled in the art that since blocks of any size may be processed according to the invention, the sub-quadrants may comprise more than one wavelet coefficient. Moreover, the quadrants and sub-quadrants may comprise a non-symmetrical grouping of wavelet coefficients.

A very important case discussed above is the 4x8 pixel block case. As discussed above with respect to FIG. 4, the 4x8 pixel block may be subjected to DCT processing and truncation prior to Haar wavelet transformation to produce a 4x4 Haar wavelet coefficient block. If the optional step of DCT coefficient truncation is not used, then each quadrant of the Haar wavelet coefficient block will comprise a 2x4 coefficient quadrant. In processing the sub-quadrants of such a block, the sub-quadrants may be arbitrarily designated to emphasize the most important information. For example, in one embodiment of the invention utilizing a non-truncated 4x8 block, the LLLL sub-quadrant comprises wavelet coefficient X₀, the LLLH sub-quadrant comprises wavelet coefficients X₄ and X₅, , the LLHL sub-quadrant comprises wavelet coefficients X₁ and X₂, and the LLHH sub-quadrant comprises wavelet coefficients X₃, X₆ and X₇. Alternatively, the generated wavelet coefficients for each sub-quadrant may be reduced to a single coefficient by averaging or otherwise combining the generated wavelets.

FIG. 6 depicts a block diagram of a compression process according to the invention. Specifically, FIG. 6 depicts a block diagram of a process 600 for decomposing pixel domain information into wavelet domain information. Specifically, four pixels 610-613 are processed according to a standard Haar transform to produce four Haar wavelet transform coefficients 630-633 at a first level of decomposition. Additionally, the first two wavelet coefficients 630, 631 a second level decomposition utilizing the Haar wavelet transform is used to process to produce a pair of DCT domain coefficients.

A first level decomposition utilizing a Haar wavelet transform is performed on the pixel block to produce a corresponding Haar wavelet coefficient block. Specifically, pixel 610 is added to pixel 611 by a first adder 620 to produce a first wavelet coefficient 630 (i.e., X₀). Pixel 612 is added to pixel 613 by a second adder 622 to produce a second wavelet coefficient 631 (i.e., X₁). Pixel 611 is subtracted from pixel 610 to produce third wavelet coefficient 632 (i.e., X₂). Pixel 613 is subtracted from pixel 612 by a second subtractor 623 to produce a fourth wavelet coefficient 633 (i.e., X₃). Thus, the pixel block (x₀-x₃) is subjected to a first level of decomposition to produce a corresponding Haar wavelet coefficient block (X₀-X₃).

Additionally, a second level decomposition is performed on the first and second wavelet coefficients 630 and 631. Specifically, wavelet coefficient 630 is added to wavelet coefficient 631 by a third adder 641 to produce a fifth wavelet coefficient 650 (i.e., Y₀); and wavelet coefficient 631 is subtracted from wavelet coefficient 630 by a third subtractor 642 to produce a sixth wavelet coefficient 651 (i.e., Y₁). Thus, pixel 610 to 613 are processed using the Haar transform to produce first level decomposition Haar wavelet coefficients 632 and 633, and second level decomposition wavelet coefficient 650 and 651. By processing pixel 610 through 613 in this matter, the resulting wavelet coefficients 632, 633, 650 and 651 are produced which represent the same pixel information in the wavelet domain.

The above-described process 600 is suitable for use in, e.g., the compression module 200 of FIG. 1 or FIG. 2 in non-DCT compression mode. Similarly, the decompression module 300 of FIG. 1 or FIG. 3 in non-DCT compression mode will perform a mirror image of the above-described process 600 to extract, from the various coefficients, the original pixel block compressed by compression module 200.

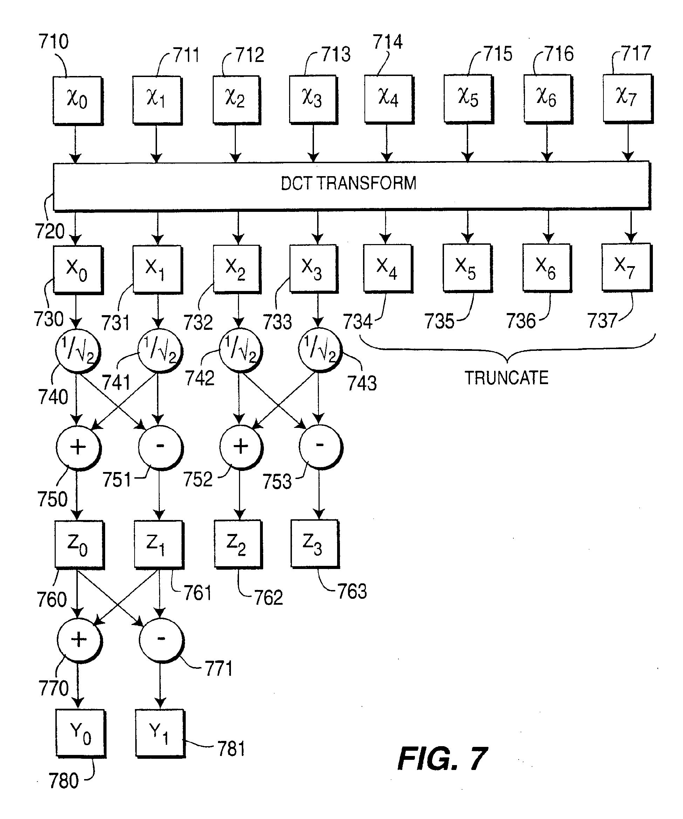

FIG. 7 depicts a block diagram of a compression process according to the invention. Specifically, FIG. 7 depicts a block diagram of a process 700 for decomposing pixel domain information into wavelet domain information. A pixel block comprising pixels 710 through 717 (i.e., x₀-x₇) is subjected to a DCT transform process 720 to produce a corresponding DCT coefficient block comprising DCT coefficients 730 through 737 (i.e., X₀-X₇). The high order DCT coefficients 734 through 737 are truncated, while the low order DCT coefficients 730 through 733 are coupled to respective scaling units 740 through 743. Scaling units 740 through 743 scale, respectively, low order DCT coefficients 730 through 733 by a factor of 1 divided by the square root of 2 (i.e., 0.7071).

The scaled coefficients (i.e., the coefficients at the output of a respective scaling unit) are then subjected to a modified Haar transform (i.e., a Haar transform in which the order of additions and subtractions have been modified from that of a standard Haar transform). Specifically, the coefficient produced by scaler 740 is added to the coefficient produced by scaler 741 by a first adder 750 to produce a first wavelet coefficient 760 (i.e., Z₀). The coefficient produced by scaler 741 is subtracted from the coefficient produced by scaler 740 by a first subtractor 751 to produce a second wavelet coefficient 761 (i.e., Z₁). The coefficient produced by scaler 742 is added to the coefficient produced by scaler 743 by a second adder 752 to produce a third wavelet coefficient 762 (i.e., Z₂). The coefficient produced by scaler 743 is subtracted from the coefficient produced by scaler 742 by a second adder 753 to produce a fourth wavelet coefficient 763 (i.e., Z₃).

A second level wavelet decomposition is performed on the first two wavelet coefficients 760 and 761 as follows. The first wavelet coefficient 760 is added to the second wavelet coefficient 761 by an adder 770 to produce a first second-level decomposition wavelet coefficient 780. The second wavelet coefficient 761 is subtracted from the first wavelet coefficient 760 by a subtractor 771 to produce a second-level decomposition wavelet coefficient 781.

Thus, the pixel block represented by pixel 710 through 717 has been compressed into two first-level decomposition wavelet coefficients (i.e., 762 and 763) and two second-level decomposition wavelet coefficients (780 and 781).

The above-described process 700 is suitable for use in, e.g., the compression module 200 of FIG. 1 or FIG. 2 in DCT compression mode. Similarly, the decompression module 300 of FIG. 1 or FIG. 3 in DCT compression mode will perform a mirror image of the above-described process 700 to extract, from the various coefficients, the original pixel block compressed by compression module 200.

The present invention can be embodied in the form of computer-implemented processes and apparatuses for practicing those processes. The present invention also can be embodied in the form of computer program code embodied in tangible media, such as floppy diskettes, CD-ROMs, hard drives, or any other computer readable storage medium, wherein , when the computer program code is loaded into and executed by a computer, the computer becomes an apparatus for practicing the invention. The present invention can also be embodied in the form of computer program code, for example whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

Although various embodiments which incorporate the teachings of the present invention have been shown and described in detail herein, those skilled in the art can readily devise many other varied embodiments that still incorporate these teachings within the scope of the appended claims.

## Claims

1. A method for processing image information written in a system (100) for decoding an MPEG-like video stream, the method including compressing said image information and then storing the compressed image information in a memory module (117) within said system and comprising the steps of:
transforming (406), using a Haar wavelet transform, a pixel block to form a Haar coefficient block;
quantizing (408-414), using a plurality of scaling factors, said Haar coefficient block to form a respective quantized Haar coefficient block, said plurality of scaling factors being selected to preferentially allocate an available bit budget to quantize Haar coefficients representing relatively low vertical and horizontal spatial frequency components of said pixel block;
**characterised in that** said quantizing further comprises associating (530) said Haar wavelet coefficients with one of a low vertical and low horizontal spatial frequency quadrant (LL), a low vertical and high horizontal spatial frequency quadrant (LH), a high vertical and low horizontal spatial frequency quadrant (HL), and a high vertical and high horizontal spatial frequency quadrant (HH), with said LL quadrant comprising a DC sub-quadrant and a plurality of non-DC sub-quadrants, quantizing (408) using a first bit allocation, said Haar coefficients associated with said DC sub-quadrant, quantizing (408) using a second bit allocation, said Haar coefficients associated with said non-DC sub-quadrants, quantizing (406) using a third bit allocation, said Haar coefficients associated with said HL and HH quadrants, and quantizing (412, 414) using a fourth bit allocation, said Haar coefficients associated with said LH quadrant, where said fourth bit allocation is increased if more than a predetermined number of LL, HL and HH quadrant coefficients are quantized to zero;
packing (416) each of said quantized Haar coefficients and at least one of said of plurality of scaling factors into a respective word; and
storing said word in said memory module (117).

2. The method of claim 1, further comprising the steps of:
reading, from said memory module, said stored word;
unpacking said stored word to retrieve said quantized Haar coefficients and said at least one of said plurality of scaling factors;
inverse quantizing, using said retrieved at least one of said plurality of scaling factors, said Haar coefficient block to form a respective inverse quantized Haar coefficient block; and
inverse transforming, using said Haar wavelet transform, said inverse quantized Haar coefficient block to form a respective pixel block.

3. The method of claim 1 or claim 2, wherein said step of transforming comprises the steps of:
transforming (404), using a discrete cosine transform (DCT) said pixel block to form a DCT coefficient block; and
transforming (406), using said modified Haar wavelet transform, said DCT coefficient block to form said Haar coefficient block.

4. The method of claim 1 or claim 2, wherein said step of transforming comprises the steps of:
transforming (404), using a discrete cosine transform (DCT) said pixel block to form an DCT coefficient block;
truncating (405) a plurality of high order DCT coefficients within said DCT coefficient block to form a truncated DCT coefficient block; and
transforming (406), using said modified Haar wavelet transform, said truncated DCT coefficient block to form said Haar coefficient block.

5. The method of claim 4, wherein said step of truncation reduces the number of coefficients in said DCT coefficient block by a factor of at least two.

6. The method of claim 1, wherein, in the case of said pixel blocks comprising a 4x4 pixel block:
said first bit allocation comprises an eight bit allocation;
said second bit allocation comprises a four bit allocation and a sign bit allocation;
said third bit allocation comprises a two bit allocation and a sign bit allocation; and
said fourth bit allocation comprises either a two bit allocation and a sign bit allocation, or a three bit allocation and a sign bit allocation.

7. The method of claim 1, wherein:
said Haar coefficients associated with said DC sub-quadrant are quantized using a first scaling factor;
said Haar coefficients associated with said non-DC sub-quadrants are quantized using a second scaling factor;
said Haar coefficients associated with said HL and HH quadrants are quantized using a third scaling factor; and
said Haar coefficients associated with said LH quadrant are quantized using one of said third scaling factor or a fourth scaling factor.

8. The method of claim 7, wherein:
said first scaling factor is a predetermined value;
said second scaling factor comprises said predetermined value multiplied by 2^{m};
said third scaling factor comprises said predetermined value multiplied by 2ⁿ; and
said fourth scaling factor comprises said predetermined value multiplied by 2⁽ⁿ⁾ or 2⁽ⁿ⁻¹⁾.

9. The method of claim 1, wherein:
said Haar coefficients associated with said DC sub-quadrant are quantized using a scaling factor of four;
said Haar coefficients associated with said non-DC sub-quadrants are quantized using a scaling factor of 4*2ⁿ;
said Haar coefficients associated with said HL and HH quadrants are quantized using a scaling factor of 4*2ⁿ; and
said Haar coefficients associated with said LH quadrant are quantized using a scaling factor of 4*2ⁿ or 4*2⁽ⁿ⁺¹⁾.

10. The method of claim 9, wherein:
said steps of transforming, quantizing, packing and storing are repeated for each of a plurality of pixel blocks; and
said scaling factor variables n and m are recalculated for each respective Haar coefficient block.

11. The method of any one of claims 1 to 10, wherein said steps of transforming, quantizing, packing and storing are repeated (418) for each pixel block forming an image frame, such that said memory module (117) stores an entire compressed image frame.

## Patentansprüche

1. Verfahren zur Verarbeitung von Bildinformationen, die in einem System (100) zum Dekodieren eines MPEG-artigen Videostreams gespeichert sind, wobei das Verfahren das Komprimieren der Bildinformationen und dann das Speichern der komprimierten Bildinformationen in einem Speichermodul (117) innerhalb des Systems enthält und die folgenden Schritte umfasst:
Transformieren (406), unter Verwendung einer Haarwavelet-Transformation, eines Pixelblocks zum Bilden eines Haar-Koeffizientenblocks;
Quantisieren (408-414), unter Verwendung mehrerer Skalierungsfaktoren, des Haar-Koeffizientenblocks zum Bilden eines entsprechenden quantisierten Haar-Koeffizientenblocks, wobei die mehreren Skalierungsfaktoren so ausgewählt sind, dass vorzugsweise ein verfügbares Bit-Budget zum Quantisieren von Haar-Koeffizienten alloziert wird, die Komponenten des Pixelblocks relativ geringer vertikaler und horizontaler räumlicher Frequenz darstellen;
**gekennzeichnet dadurch, dass** das Quantisieren ferner das Zuordnen (530) der Haarwavelet-Koeffizienten zu entweder einem Quadranten (LL) geringer vertikaler und geringer horizontaler räumlicher Frequenz, einem Quadranten (LH) geringer vertikaler und hoher horizontaler räumlicher Frequenz, einem Quadranten (HL) hoher vertikaler und geringer horizontaler räumlicher Frequenz oder einem Quadranten (HH) hoher vertikaler und hoher horizontaler räumlicher Frequenz, wobei der LL-Quadrant einen DC-Unterquadranten und mehrere Nicht-DC-Unterquadranten umfasst, wobei das Quantisieren (408) eine erste Bit-Allokation verwendet, wobei die Haar-Koeffizienten dem DC-Unterquadranten zugeordnet sind, wobei das Quantisieren (408) eine zweite Bit-Allokation verwendet, wobei die Haar-Koeffizienten den Nicht-DC-Unterquadranten zugeordnet sind, wobei das Quantisieren (406) eine dritte Bit-Allokation verwendet, wobei die Haar-Koeffizienten dem HL- und dem HH-Quadranten zugeordnet sind, und das Quantisieren (412, 414) eine vierte Bit-Allokation verwendet, wobei die Haar-Koeffizienten dem LH-Quadranten zugeordnet sind, wobei die vierte Bit-Allokation erhöht wird, falls mehr als eine vorgegebene Anzahl von Koeffizienten des LL-, des HL- und des HH-Quadranten auf Null quantisiert werden;
Packen (416) jedes der quantisierten Haar-Koeffizienten und mindestens eines der mehreren Skalierungsfaktoren in ein entsprechendes Wort; und
Speichern des Worts im Speichermodul (117).

2. Verfahren nach Anspruch 1, ferner umfassend die folgenden Schritte:
Lesen des gespeicherten Worts aus dem Speichermodul;
Auspacken des gespeicherten Worts zum Entnehmen der quantisierten Haar-Koeffizienten und des mindestens einen der mehreren Skalierungsfaktoren;
inverses Quantisieren, unter Verwendung des entnommenen mindestens einen der mehreren Skalierungsfaktoren, des Haar-Koeffizientenblocks, um einen entsprechenden invers-quantisierten Haar-Koeffizientenblock zu bilden;
inverses Transformieren, unter Verwendung der Haarwavelet-Transformation, des invers-quantisierten Haar-Koeffizientenblocks, um einen entsprechenden Pixelblock zu bilden.

3. Verfahren nach Anspruch 1 oder 2, wobei der Transformationsschritt die folgenden Schritte umfasst:
Transformieren (404), unter Verwendung einer diskreten Kosinustransformation (DCT), des Pixelblocks, um einen DCT-Koeffizientenblock zu bilden; und
Transformieren (406), unter Verwendung der modifizierten Haarwavelet-Transformation, des DCT-Koeffizientenblocks, um den Haar-Koeffizientenblock zu bilden.

4. Verfahren nach Anspruch 1 oder 2, wobei der Transformationsschritt die folgenden Schritte umfasst:
Transformieren (404), unter Verwendung einer diskreten Kosinustransformation (DCT), des Pixelblocks, um einen DCT-Koeffizientenblock zu bilden;
Abschneiden (405) mehrerer DCT-Koeffizienten hoher Ordnung innerhalb des DCT-Koeffizientenblocks, um einen abgeschnittenen DCT-Koeffizientenblock zu bilden;
Transformieren (406), unter Verwendung der modifizierten Haarwavelet-Transformation, des abgeschnittenen DCT-Koeffizientenblocks, um den Haar-Koeffizientenblock zu bilden.

5. Verfahren nach Anspruch 4, wobei der Abtrennschritt die Anzahl von Koeffizienten im DCT-Koeffizientenblock um einen Faktor von mindestens 2 verringert.

6. Verfahren nach Anspruch 1, wobei im Falle, dass die Pixelblöcke einen 4x4-Pixelblock umfassen:
die erste Bit-Allokation eine 8-Bit-Allokation umfasst;
die zweite Bit-Allokation eine 4-Bit-Allokation und eine Vorzeichenbit-Allokation umfasst;
die dritte Bit-Allokation eine 2-Bit-Allokation und eine Vorzeichenbit-Allokation umfasst; und
die vierte Bit-Allokation entweder eine 2-Bit-Allokation und eine Vorzeichenbit-Allokation oder eine 3-Bit-Allokation und eine Vorzeichenbit-Allokation umfasst.

7. Verfahren nach Anspruch 1, wobei:
die dem DC-Unterquadranten zugeordneten Haar-Koeffizienten unter Verwendung eines ersten Skalierungsfaktors quantisiert werden;
die den Nicht-DC-Unterquadranten zugeordneten Haar-Koeffizienten unter Verwendung eines zweiten Skalierungsfaktors quantisiert werden;
die den HL- und HH-Quadranten zugeordneten Haar-Koeffizienten unter Verwendung eines dritten Skalierungsfaktors quantisiert werden; und
die dem LH-Quadranten zugeordneten Haar-Koeffizienten unter Verwendung eines dritten oder eines vierten Skalierungsfaktors quantisiert werden.

8. Verfahren nach Anspruch 7, wobei:
der erste Skalierungsfaktor ein vorgegebener Wert ist;
der zweite Skalierungsfaktor den mit 2^{m} multiplizierten vorgegebenen Wert umfasst;
der dritte Skalierungsfaktor den mit 2ⁿ multiplizierten vorgegebenen Wert umfasst; und
der vierte Skalierungsfaktor den mit 2⁽ⁿ⁾ oder 2⁽ⁿ⁻¹⁾ multiplizierten vorgegebenen Wert umfasst.

9. Verfahren nach Anspruch 1, wobei:
die dem DC-Unterquadranten zugeordneten Haar-Koeffizienten unter Verwendung eines Skalierungsfaktors von 4 quantisiert werden;
die den Nicht-DC-Unterquadranten zugeordneten Haar-Koeffizienten unter Verwendung eines Skalierungsfaktors von 4*2ⁿ quantisiert werden;
die den HL- und HH-Quadranten zugeordneten Haar-Koeffizienten unter Verwendung eines Skalierungsfaktors von 4*2ⁿ quantisiert werden;
die dem LH-Quadranten zugeordneten Haar-Koeffizienten unter Verwendung eines Skalierungsfaktors von 4*2ⁿ oder von 4* 2⁽ⁿ⁻¹⁾ quantisiert werden.

10. Verfahren nach Anspruch 9, wobei:
die Transformations-, Quantisierungs-, Pack- und Speicherschritte für jeden mehrerer Pixelblöcke wiederholt werden und
die Skalierungsfaktorvariablen n und m für jeden entsprechenden Haar-Koeffizientenblock neuberechnet werden.

11. Verfahren nach einem der Ansprüche 1 bis 10, wobei die Transformations-, Quantisierungs-, Pack- und Speicherschritte für jeden einen Bildframe bildenden Pixelblock wiederholt werden (418), so dass das Speichermodul (117) einen gesamten komprimierten Bildframe speichert.

## Revendications

1. Procédé de traitement d'informations d'image écrites dans un système (100) pour décoder un flux vidéo MPEG, le procédé comportant le fait de comprimer lesdites informations d'image et stocker ensuite les informations d'image compressées dans un module de mémoire (117) à l'intérieur dudit système et comprenant les étapes consistant à :
transformer (406), en utilisant une transformée en ondelettes de Haar, un bloc de pixels pour former un bloc de coefficients de Haar ;
quantifier (408-414), en utilisant une pluralité de facteurs d'échelle, ledit bloc de coefficients de Haar pour former un bloc de coefficients de Haar quantifié respectif, ladite pluralité de facteurs d'échelle étant choisis pour allouer de manière préférentielle un budget de bits disponible à des coefficients de Haar quantifiés représentant des composantes de fréquences spatiales relativement basses horizontales et verticales dudit bloc de pixels ;
**caractérisé en ce que** ladite quantification comprend en outre le fait d'associer (530) lesdits coefficients d'ondelettes de Haar avec l'un d'un quadrant de basses fréquences spatiales verticales et de basses fréquences spatiales horizontales (LL), d'un quadrant de basses fréquences spatiales verticales et de hautes fréquences spatiales horizontales (LH), d'un quadrant de hautes fréquences spatiales verticales et de basses fréquences spatiales horizontales (HL), et d'un quadrant de hautes fréquences spatiales verticales et de hautes fréquences spatiales horizontales (HH), audit quadrant LL comprenant un sous-quadrant DC et une pluralité de sous-quadrants non-DC, de quantifier (408) en utilisant une première allocation de bits, lesdits coefficients de Haar associés audit sous-quadrant DC, de quantifier (408) en utilisant une deuxième allocation de bits, lesdits coefficients de Haar associés auxdits sous-quadrants non-DC, de quantifier (406) en utilisant une troisième allocation de bits, lesdits coefficients de Haar associés auxdits quadrants HL et HH, et de quantifier (412, 414) en utilisant une quatrième allocation de bits, lesdits coefficients de Haar associés audit quadrant LH, où ladite quatrième allocation de bits est augmentée si plus d'un nombre prédéterminé de coefficients de quadrants LL, HL et HH sont quantifiés à zéro ;
grouper (416) chacun desdits coefficients de Haar quantifiés et au moins l'un de ladite pluralité de facteurs d'échelle en un mot respectif ; et
stocker ledit mot dans ledit module de mémoire (117).

2. Procédé de la revendication 1, comprenant en outre les étapes consistant :
à lire, à partir dudit module de mémoire, ledit mot stocké ;
à dégrouper ledit mot stocké pour récupérer lesdits coefficients de Haar quantifiés et ledit au moins l'un de ladite pluralité de facteurs d'échelle ;
à effectuer une quantification inverse, en utilisant ledit au moins un facteur récupéré de ladite pluralité de facteurs d'échelle, dudit bloc de coefficients de Haar pour former un bloc de coefficients de Haar inversement quantifié respectif ; et
à effectuer une transformation inverse, en utilisant ladite transformée en ondelettes de Haar, dudit bloc de coefficients de Haar inversement quantifié pour former un bloc de pixels respectif.

3. Procédé de la revendication 1 ou 2, dans lequel ladite étape de transformation comprend les étapes consistant :
à transformer (404), en utilisant une transformée en cosinus discrète (DCT), ledit bloc de pixels pour former un bloc de coefficients de DCT ; et
à transformer (406), en utilisant ladite transformée en ondelettes de Haar modifiée, ledit bloc de coefficients de DCT pour former ledit bloc de coefficients de Haar.

4. Procédé de la revendication 1 ou 2, dans lequel ladite étape de transformation comprend les étapes consistant :
à transformer (404), en utilisant une transformée en cosinus discrète (DCT), ledit bloc de pixels pour former un bloc de coefficients de DCT ;
à tronquer (405) une pluralité de coefficients de DCT d'ordre élevé à l'intérieur dudit bloc de coefficients de DCT pour former un bloc de coefficients de DCT tronqués ; et
à transformer (406), en utilisant ladite transformée en ondelettes de Haar modifiée, ledit bloc de coefficients de DCT tronqués pour former ledit bloc de coefficients de Haar.

5. Procédé de la revendication 4, dans lequel ladite étape de troncature diminue le nombre de coefficients dans ledit bloc de coefficients de DCT par un facteur d'au moins deux.

6. Procédé de la revendication 1, dans lequel, dans le cas desdits blocs de pixels comprenant un bloc de pixels 4x4 :
ladite première allocation de bits comprend une allocation de huit bits ;
ladite deuxième allocation de bits comprend une allocation de quatre bits et une allocation de bits de signe ;
ladite troisième allocation de bits comprend une allocation de deux bits et une allocation de bits de signe ; et
ladite quatrième allocation de bits comprend soit une allocation de deux bits et une allocation de bits de signe, ou une allocation de trois bits et une allocation de bits de signe.

7. Procédé de la revendication 1, dans lequel :
lesdits coefficients de Haar associés audit sous-quadrant DC sont quantifiés en utilisant un premier facteur d'échelle ;
lesdits coefficients de Haar associés auxdits sous-quadrants non-DC sont quantifiés en utilisant un deuxième facteur d'échelle ;
lesdits coefficients de Haar associés auxdits quadrants HL et HH sont quantifiés en utilisant un troisième facteur d'échelle ; et
lesdits coefficients de Haar associés audit quadrant LH sont quantifiés en utilisant l'un dudit troisième facteur d'échelle ou dudit quatrième facteur d'échelle.

8. Procédé de la revendication 7, dans lequel :
ledit premier facteur d'échelle est une valeur prédéterminée ;
ledit deuxième facteur d'échelle comprend ladite valeur prédéterminée multipliée par 2^{m};
ledit troisième facteur d'échelle comprend ladite valeur prédéterminée multipliée par et
ledit quatrième facteur d'échelle comprend ladite valeur prédéterminée multipliée par 2⁽ⁿ⁾ ou 2⁽ⁿ⁻¹⁾.

9. Procédé de la revendication 1, dans lequel :
lesdits coefficients de Haar associés audit sous-quadrant DC sont quantifiés en utilisant un facteur d'échelle de quatre ;
lesdits coefficients de Haar associés auxdits sous-quadrants non-DC sont quantifiés en utilisant un facteur d'échelle de 4 *
lesdits coefficients de Haar associés auxdits quadrants HL et HH sont quantifiés en utilisant un facteur d'échelle de 4 * 2ⁿ; et
lesdits coefficients de Haar associés audit quadrant LH sont quantifiés en utilisant un facteur d'échelle de 4 * ²ⁿ ou de 4 * 2⁽ⁿ⁻¹⁾.

10. Procédé de la revendication 9, dans lequel :
lesdites étapes de transformation, de quantification, de groupage et de stockage sont répétées pour chacun d'une pluralité de blocs de pixels ; et
lesdites variables de facteur d'échelle n et m sont recalculées pour chaque bloc de coefficients de Haar respectif.

11. Procédé de l'une quelconque des revendications 1 à 10, dans lequel lesdites étapes de transformation, de quantification, de groupage et de stockage sont répétées (418) pour chaque bloc de pixels formant une trame d'image, de sorte que ledit module de mémoire (117) stocke une trame d'image compressée entière.
